# EUROPEAN PATENT APPLICATION

(11) **EP 2 319 305 A1**
(43) Date of publication of application: **11.05.2011**
(21) Application number: 10189594.4
(22) Date of filing: 01.11.2010
(51) Int. Cl.: A01M 7/00

(54) **Self-propelled application machine drive system**

(30) Priority: 05.11.2009 GB 0919399; 05.11.2009 GB 0919402
(71) Applicant: Agco Netherlands B.V., 5971 NG Grubbenvorst (NL)
(72) Inventor: Wouters, Ronald, NL6191GT, Neerbeek (NL); Broers, Rene, NL8287 AM, Eys (NL); Kunst, Adrie, NL 5971 DK, Grubbenvorst (NL)
(74) Representative: Morrall, Roger

(57) **Abstract**

A self-propelled agricultural application machine comprising a driver's cab (17) mounted above a chassis is provided. A storage tank (15) for holding the material to be applied is carried by the chassis. A cooling package (160) for an engine (111) is located behind the cab.

## Description

The invention relates to self-propelled agricultural application machines, such as crop sprayers, which comprise a chassis which carries a storage tank for the material to be applied. In particular, the invention relates to cooling systems for engines of self-propelled agricultural application machines.

Agricultural application machines such as crop sprayers comprise a large volume tank carried on a chassis. Such machines can be trailed behind a tractor or provided as a self-propelled unit having an integral cab and engine. The machine further comprises an extending boom which provides a transverse line of uniformly spaced spray nozzles connected by pipes to the tank. During operation the application machine is moved across fields of crops such as cereals and maize to apply liquid fertilizer or chemical treatment such as herbicides, fungicides and pesticides to the crop in a controlled manner.

Forward visibility for the driver is often restricted by the presence of a covered engine compartment.

It is an object of the invention to provide a self-propelled agricultural application machine with improved forward visibility for the driver.

According to the invention there is provided a self-propelled agricultural application machine comprising a driver's cab mounted above a chassis, a storage tank carried by the chassis for holding the material to be applied, an engine and a cooling package for the engine located behind the cab. Advantageously, by locating the cooling package behind the cab, the volume of any compartment required forward of the cab is reduced thus improving forward visibility. Furthermore, the cooling package is shielded somewhat from the intake of airborne seeds which are created as the machine is driven through certain crops/plants.

In a preferred arrangement the cooling package is located between the storage tank and the cab. The storage tank preferably comprises a cut-away portion to accommodate positioning of the cooling package so that at least part of the cooling package extends rearward from the forward-most edge of the storage tank. Advantageously, this arrangement optimises the space available above the chassis.

The engine may be disposed rearwardly of the cooling package thereby freeing up more space in front of the cab where the engine is traditionally located.

In a preferred arrangement the chassis comprises a central longitudinal beam from which at least a pair of wheels are suspended. By forming the chassis from a single beam in this way, the steering angle of steerable wheels can be increased whilst still keeping the track width within constraints set by maximum widths permitted on highways.

In some countries, such as The United Kingdom, rural highways are typically narrow and limit the width of self-propelled application machines. The resulting separation between the steerable wheels and a conventional chassis is often inadequate to permit a satisfactory steering angle. To compound the problem of large turning radii, application machines often employ wheels of large diameter to achieve sufficient ground clearance. By providing a central longitudinal beam to provide a 'backbone' for the machine in accordance with the invention, the separation between the wheels and the chassis can be increased, in turn increasing the maximum steering angle without sacrificing wheel diameter.

Also, this allows the engine to be positioned to one side of the longitudinal beam and between two wheels on one side of the machine at a height below the cooling package thus delivering a low centre of gravity and increased vehicle stability. Furthermore, access to the engine for maintenance is improved because there is no need for the operator to climb on top of the vehicle frame. This is both safer and more convenient.

The cab may be supported forwardly of the longitudinal beam by a cab support structure which is itself supported by the longitudinal beam. Advantageously, this places the cab in front of the chassis rather than on top. In turn this improves the forward visibility for the driver. Furthermore, the cab is disposed lower which lowers the vehicle's centre of mass thus increasing the stability thereof.

An operator's platform may be provided and located behind the cab and above the chassis. When the platform is positioned between the cab and the cooling package, an area of free space is provided directly in front of the cooling package which delivers unrestricted airflow thereto. Advantageously, the cooling package can therefore function efficiently whilst the cab provides some protection from airborne seeds. Furthermore, the platform allows easy access to the cooling package for maintenance.

The cooling package typically comprises a radiator for cooling fluid and a fan for forcing an air flow through the radiator.

Further advantages of the invention will become apparent from the following description of specific embodiments with reference to the appended drawings in which-
- Figure I: is a perspective view of a self-propelled agricultural sprayer in accordance with the invention;
- Figure 2: is a side view of the sprayer of Figure 1;
- Figure 3: is a perspective view of the chassis of the sprayer of Figure 1;
- Figure 4: is an underside view of the sprayer of Figure 1(with engine removed);
- Figure 5: is another underside view of the sprayer of Figure 1;
- Figure 6: is an underside view of the chassis shown in Figure 3;
- Figure 7: is a perspective view of the tank of the sprayer of Figure 1;
- Figure 8: is a plan view of the tank of Figure 7;
- Figure 9: is a rear view of the tank of Figure 7; and,
- Figure 10: is a rear perspective view of the chassis, engine and cooling package in accordance with one embodiment of the invention.

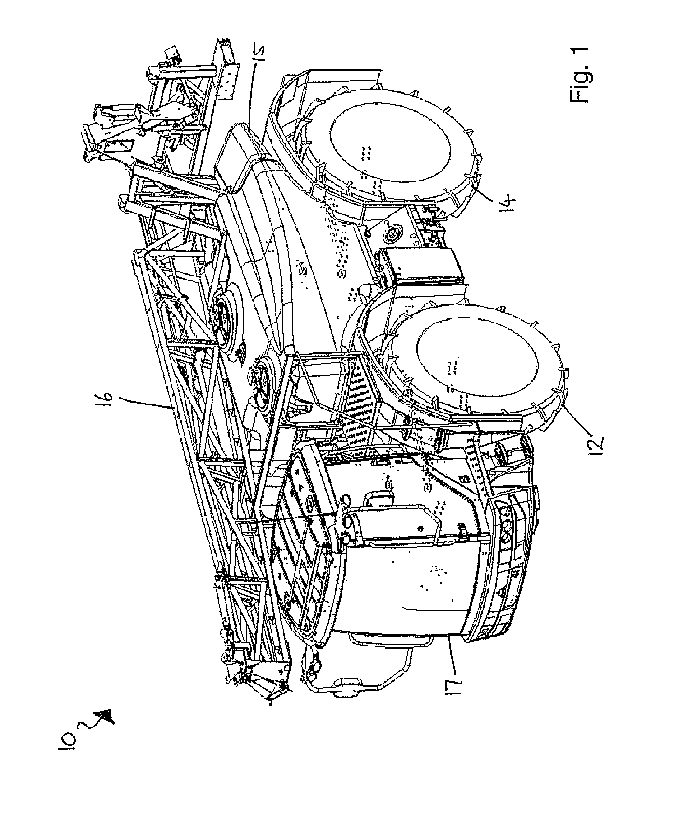

With reference to Figures 1 to 6, a self-propelled arable crop sprayer 10 comprises a pair of front wheels 12 and pair of rear wheels 14 each wheel being separately mounted to a chassis 100 by respective variable height suspension means. The sprayer 10 further comprises a tank 15, a boom assembly 16 and driver's cab 17. The tank 15 accounts for the majority of the sprayer's volume and serves to hold the liquid material which is to be applied to a field. By way of example, the liquid material may comprise fertilizer or other chemical treatment such as herbicides, fungicides, pesticides or growth restrictors.

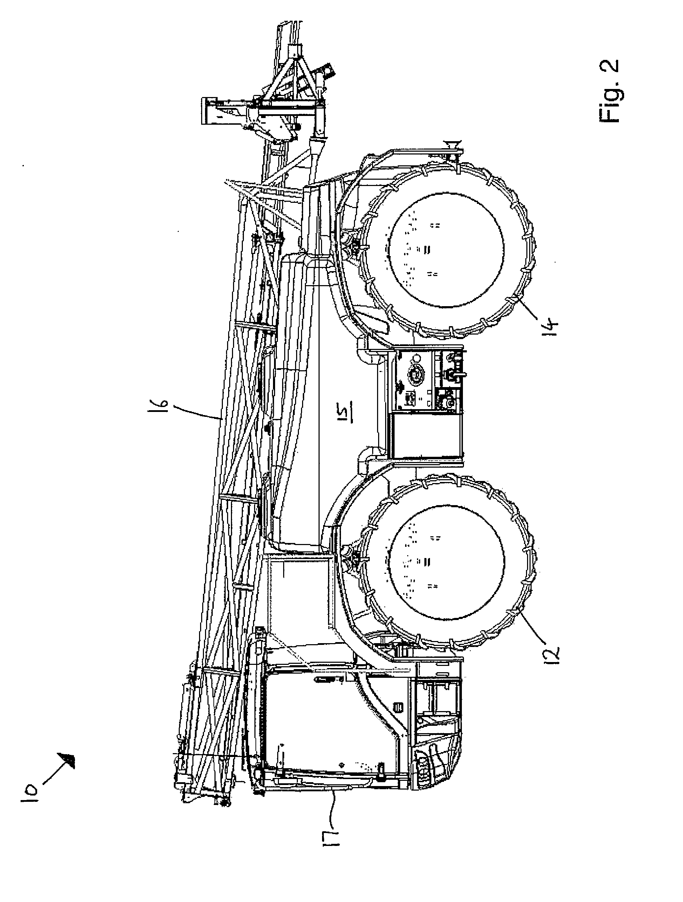

The liquid material is delivered in a controlled manner to spray nozzles (not shown) located on the boom assembly 16 by a network of supply pipes (not shown). In the transport mode (shown in Figures 1 and 2) the boom assembly 16 is retracted so as to remain substantially within the profile of the vehicle body thus allowing safe movement on the highway. In an operating mode the boom assembly 16 is extended so as to provide a transversely extending boom, having a width of 24 meters for example. Driven across an arable field, the liquid material is sprayed onto the crop in strips 24 meters wide at a time. The driver located in cab 17 controls the steering of the sprayer and the control of the liquid material application. It should be understood that Figures 1 and 2 show only one half (right-hand side) of the folded boom assembly 16.

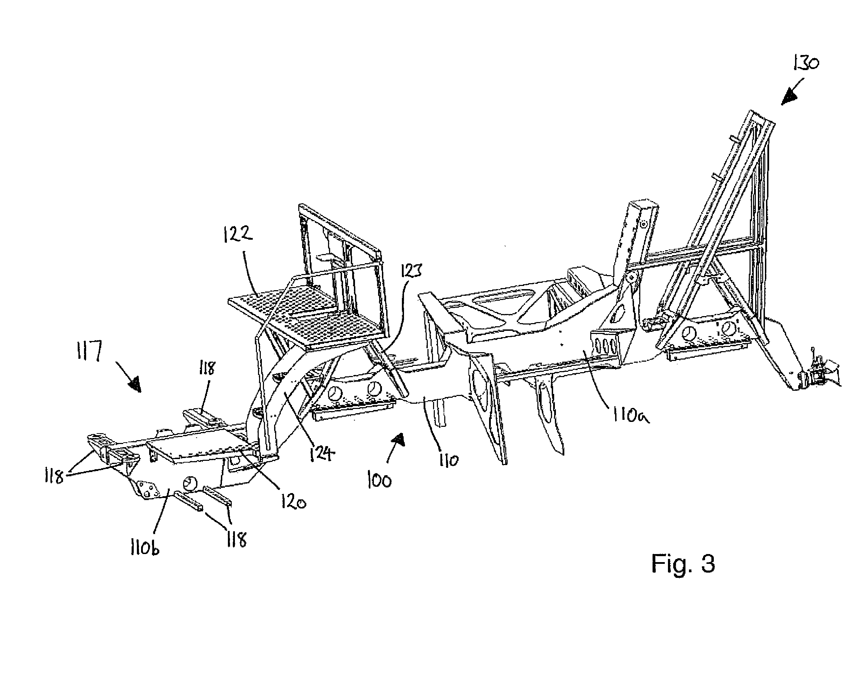

With reference to Figures 3 to 6, the chassis 100 comprises a single, centrally-disposed, longitudinal beam 110 to which the respective wheel and boom suspension means are mounted. A first section 110a of the longitudinal beam 110 extends from the rear of the sprayer 10 to approximately a region between the front wheels 12. A second section 110b is connected to the first section 1 l0a and extends forwardly at a lower height to the front of the sprayer 10.

All four wheels 12, 14 are steerable. Each of the four wheels 12, 14 is suspended from the longitudinal beam 110 by a respective wheel suspension assembly 115 which may, or may not, allow for adjustments to the suspension height of the chassis 100 and/or adjustments to the track width, that is the distance between opposite wheels. Each wheel suspension assembly is secured to the longitudinal beam 110 by appropriate means, for example by brackets bolted to the underside thereof.

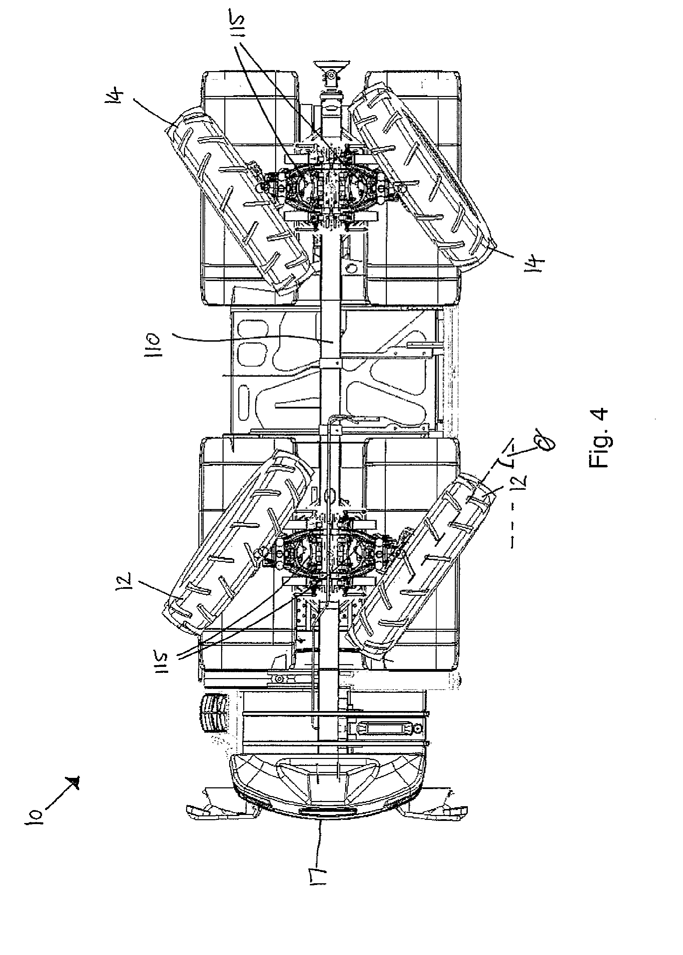

By forming the chassis 100 from a single beam 110 in this way, the steering angle of the steerable wheels 12, 14 can be increased whilst still keeping the track width within constraints set by maximum widths permitted on highways. As can be seen from Figure 4, the maximum achievable steering angle θ can exceed 30 degrees thus making the chassis arrangement particularly attractive to farmers and contractors desiring small turning radii from their application machines.

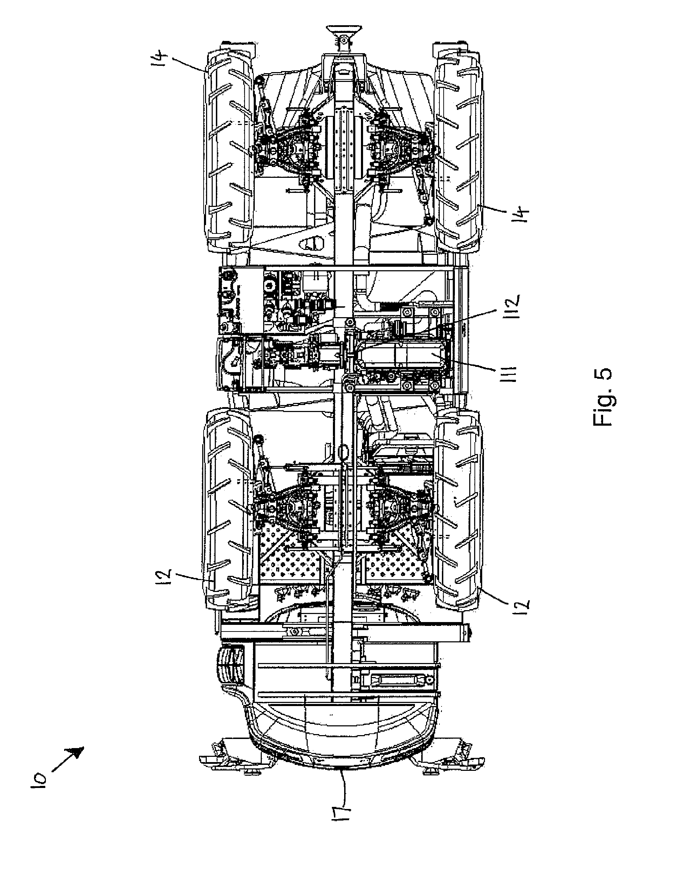

A further advantage of the chassis architecture is that it allows the engine 111 to be mounted to one side of the chassis 100 (see Figure 5) thus lowering the overall centre of mass. Further, the lower positioning of the engine 111 improves access for the operator thus making maintenance far easier and safer. The engine 111 is conveniently located in the space provided between the two wheels 12, 14 on the right-hand side of the sprayer 10. An output drive shaft 112 which is driven by the engine 111 is transversely orientated with respect to the direction of travel of the sprayer 10. The drive shaft 112 is connected through the longitudinal beam 110 to hydraulic pumps associated with the sprayer propulsion and spraying gear located on the left-hand side of the sprayer 10.

The second section 110b of the longitudinal beam I 10 provides part of a cab support structure referenced generally at 117 in Figure 3. The longitudinal part 110b has connected thereto a plurality of transverse components 118 to adequately support the weight of cab 17. By providing the cab support structure 117 at a lower height to that of the first section 110a of the longitudinal beam, and thus the tank 15 supported thereon, the centre of mass and the overall height of the sprayer is lowered. Furthermore, the driver's visibility of the crop is improved.

A lower platform 120 is attached to the second section I 10b so as to be positioned to the left-hand side of the cab 17. A raised platform 122 is attached to the first section 110a by a platform support structure 123 so as to be positioned behind the cab 17. A set of steps 124 is provided between the lower platform 120 and the raised platform 122 to allow a driver to reach the latter. From the raised platform 122, a driver is able to access the top of the tank 15.

Turning to the rear of the chassis 100, a boom support structure 130 is secured to the rear of the longitudinal beam 110. The boom assembly 16 is pivotally mounted to the boom support structure 130 to allow the boom assembly 16 to be raised and lowered. A boom lift actuator (not shown) is connected between the boom support structure 130 and the boom assembly 16 to lift and lower the boom assembly.

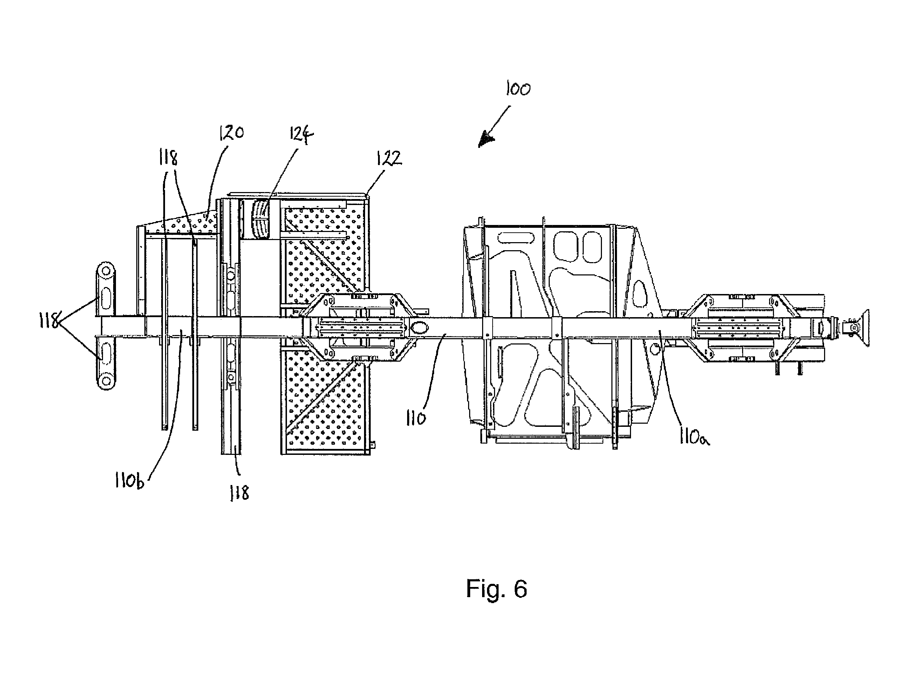

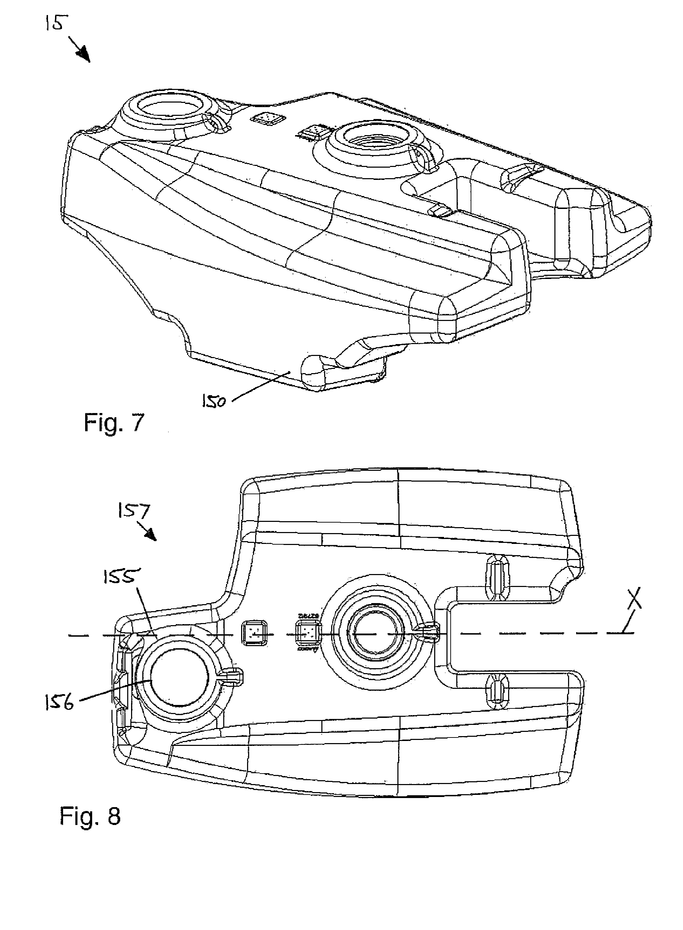

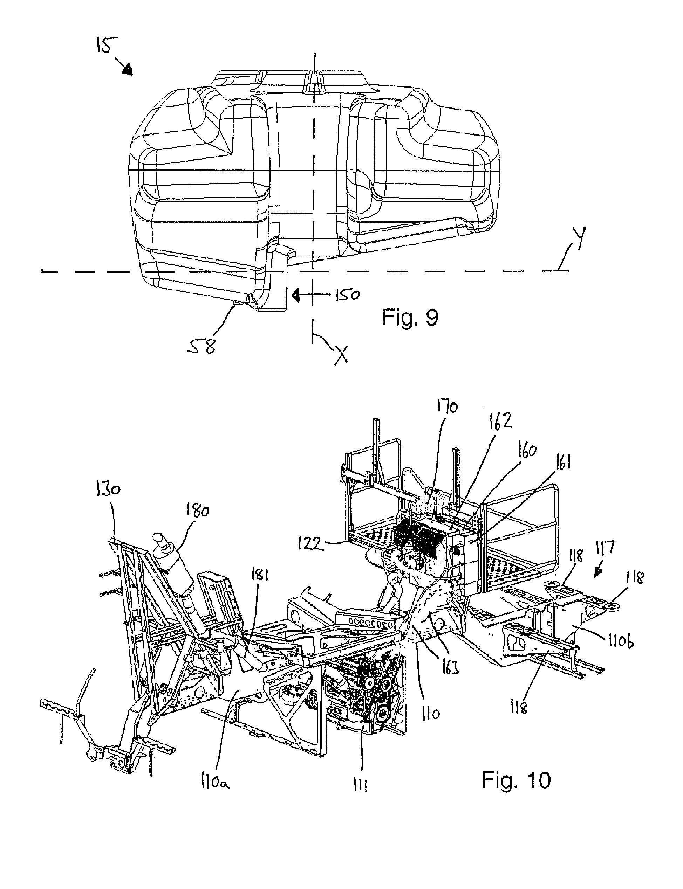

With reference to Figures 7, 8 and 9, the storage tank 15 is formed of moulded plastic and has a volume of 4500 litres for example. As can be seen from Figure 9, the tank 15 comprises a downwardly-extending portion 150 on the left-hand side which is not reflected about longitudinal and vertical plane X. In other words there is not an equivalent volume extension on the right-hand side. Therefore, in accordance with the invention, the tank is asymmetric about the longitudinal vertical plane X at least across the horizontal section Y (Figure 6).

Furthermore, as can be seen from Figure 8, the tank comprises a forwardly-extending portion 155 on the left-hand side which is also not reflected about plane X. This forward portion 55 comprises a capped filler hole 156 for filling the tank 15 with application material, typically via a hose (not shown).

The two volume extensions 154, 155 deliver a significantly greater tank volume on the left-hand side than on the right-hand side. The weight of the engine 111 is thus counterbalanced by the asymmetry thereby improving the overall stability of the sprayer 10.

The downwardly-extending portion 154 is disposed opposite the engine 111 thus minimising any torsion forces on the relatively narrow chassis 100. Moreover, being the lowest part of the tank 15, the portion 154 is the last part of the tank to empty during an application to a field. Therefore, even when the level of application material present in the tank 15 is low, the weight of the side-disposed engine 111 is counterbalanced.

The sprayer 10 further comprises a fuel tank also disposed on the right-hand side of the chassis 100. The downwardly-extending portion 154 serves also to counterbalance the weight of the fuel tank and the fuel contained therein across the longitudinal plane X.

The tank 15 also comprises an extraction pipe 58 located at the bottom of the downward extension 54 to extract the application material during operation.

With reference to Figure 10, the engine 111 has connected thereto a cooling package 160 comprising a radiator 161 and a fan 162. Fluid is conveyed between the radiator 161 and the engine 111 in a circuit by pipes 163.

The cooling package 160 is located behind the cab 17 and the raised platform 122. The major surface of the radiator 161 faces forward so that the airflow there through is generally longitudinal with respect to the direction of travel. The free space provided by the platform 122 provides for an unrestricted passage for the air drawn in through the radiator 161 by fan 162.

Locating the cooling package 160 in this way carries a number of advantages. Firstly, the space in front of the cab 17 remains unobstructed thus allowing good visibility for the driver. Secondly, any seeds disturbed by the passage of the machine 10 across the field are less likely to be drawn into the radiator 161 as the positioning behind the cab 17 provides a shield. This reduces the frequency at which the radiator 161 must be cleaned out. Thirdly, the positioning of the cooling package 160 immediately behind the platform 122 enables easy access for maintenance.

The tank 15 is provided with a cutaway portion 157 (Fig. 8) which provides a space for the cooling package 160.

The engine 111 has an air intake unit 170 associated therewith and which is also positioned immediately behind the raised platform 122 to enable easy access for maintenance. The air intake unit 170 is connected to the engine 111 by pipe 171.

An engine exhaust 180 is located towards the rear of the machine 10 and mounted to boom support structure 130. The engine exhaust 180 is connected to engine 111 by exhaust pipe 181. Locating the engine exhaust 180 towards the rear of the machine 10 ensures that potentially harmful emissions are directed away from driver. Also, the noise level within the cab 17 is minimised as a result.

From reading the present disclosure, other modification will be apparent to persons skilled in the art. Such modifications may involve other features which are already known in the field of agricultural application machines and component parts therefore and which may be used instead of or in addition to features already described herein.

## Claims

1. A self-propelled agricultural application machine comprising a driver's cab mounted above a chassis, a storage tank carried by the chassis for holding the material to be applied, an engine and a cooling package for the engine located behind the cab.

2. An application machine according to Claim I, wherein the cooling package is located between the storage tank and the cab.

3. An application machine according to Claim 2, wherein the storage tank comprises a cut-away portion to accommodate positioning of the cooling package so that at least part of the cooling package extends rearward from the forward-most edge of the storage tank.

4. An application machine according to any preceding claim, wherein the engine is disposed rearwardly of the cooling package.

5. An application machine according to any preceding claim, wherein the chassis comprises a central longitudinal beam from which at least a pair of wheels are suspended.

6. An application machine according to Claim 5, wherein the engine is positioned to one side of the longitudinal beam and between two wheels on one side of the machine at a height below the cooling package.

7. An application machine according to any preceding claim, wherein the cab is supported forwardly of the longitudinal beam by a cab support structure which is itself supported by the longitudinal beam.

8. An application machine according to any preceding claim and further comprising an operator's platform behind the cab and above the chassis.

9. An application machine according to Claim 8, wherein the platform is positioned between the cab and the cooling package.

10. An application machine according to any preceding claim, wherein the cooling package comprises a radiator for cooling fluid and a fan for forcing an air flow through the radiator.
